# EUROPÄISCHE PATENTSCHRIFT

(11) **EP 4 302 003 B1**
(45) Veröffentlichungstag und Bekanntmachung des Hinweises auf die Patenterteilung: **07.05.2025**
(21) Anmeldenummer: 22710395.9
(22) Anmeldetag: 04.03.2022
(51) Int. Cl.: F16K 11/085, F01P 7/16, F01P 7/14

(54) **VENTILEINRICHTUNG**
VALVE DEVICE
DISPOSITIF DE SOUPAPE

(30) Priorität: 05.03.2021 DE 102021202181
(43) Veröffentlichungstag der Anmeldung: 10.01.2024
(73) Patentinhaber: Mack & Schneider GmbH, 70794 Filderstadt (DE)
(72) Erfinder: BACHOFER, Steffen, 70794 Filderstadt (DE)
(74) Vertreter: Clarenbach, Carl-Philipp
(86) Internationale Anmeldenummer: PCT/EP2022/055616
(87) Internationale Veröffentlichungsnummer: WO 2022/184915

(56) Entgegenhaltungen:
- EP-A1- 0 884 507
- EP-A1- 1 482 222
- EP-A1- 3 385 583
- CH-A- 328 844
- CN-A- 111 288 187
- DE-A1- 102018 106 298
- FR-A1- 2 844 571
- FR-A1- 2 940 396
- US-A1- 2017 152 957

## Beschreibung

Die Erfindung betrifft eine Ventileinrichtung, insbesondere für einen Wasserkreislauf eines Kraftfahrzeugs, mit einem Gehäuse, das eine kreiszylinderförmige, eine Verteilerkammer umfangsseitig umschließende Gehäusewand und zumindest zwei Medienanschlüsse in und/oder an der Gehäusewand aufweist, die jeweils als Zulaufanschluss oder Ablaufanschluss für ein hydraulisches Medium an oder in der Gehäusewand ausgebildet sind und beabstandet zueinander in die Verteilerkammer münden, und mit einem in der Verteilerkammer drehbar gelagerten Ventilelement zum wahlweise fluidtechnischen Verbinden oder Trennen von zumindest zwei der Medienanschlüsse miteinander beziehungsweise voneinander.

Ventileinrichtungen der eingangs genannten Art sind aus dem Stand der Technik bereits bekannt. Um die Medienströme in einem mehrkanaligen Wasserkreislauf zu steuern oder zu regulieren, sind Ventileinrichtungen bekannt, die drei oder mehr Medienanschlüsse aufweisen, durch welche die Ventileinrichtung in den Wasserkreislauf einbindbar ist, und ein bewegbares Ventilelement, mittels dessen die Medienanschlüsse miteinander verbindbar oder voneinander trennbar sind. Dabei sind Ventile bekannt, wie beispielsweise sogenannte 3/2-Wegeventile, die drei Medienanschlüsse und zwei unterschiedliche Extremalstellungen aufweisen. So ist beispielsweise in einer ersten Extremalstellung ein erster Medienanschluss mit einem zweiten Medienanschluss verbunden, während der dritte Medienanschluss geschlossen ist, und in einer zweiten Extremalstellung sind der zweite und der dritte Medienanschluss miteinander verbunden, während der erste Medienanschluss verschlossen ist. Auch andere Einstellungen sind bekannt, in welchen beispielsweise alle Medienanschlüsse geschlossen oder alle Medienanschlüsse miteinander verbunden sind.

Aus der Offenlegungsschrift DE 10 2012 022 212 A1 ist beispielsweise eine Ventileinrichtung bekannt, bei welcher als Ventilelement ein Scheibenventil eingesetzt ist, das eine in dem Gehäuse verdrehbar gelagerte Ventilscheibe mit einer oder mehreren Durchgangsöffnungen aufweist, die auf einer in dem Gehäuse fest angeordneten Ventilscheibe aufliegt, die ebenfalls eine oder mehrere Durchgangsöffnungen aufweist. Sobald die Durchgangsöffnungen fluchtend oder überschneidend zueinander angeordnet sind, ist ein Durchfluss ermöglicht. Durch vorsehen der Durchgangsöffnungen und einer entsprechenden Verdrehung der Ventilscheibe kann der Medienstrom gezielt von einem Medienanschluss zu einem anderen der Medienanschlüsse geleitet werden. Auch sind Zwischenstellungen möglich, bei welchen das Strömungsvolumen von einem Medienanschluss zu dem anderen einstellbar sind.

Aus der Offenlegungsschrift EP 0 884 507 A1 ist eine Ventileinrichtung mit einer Verteilerkammer, in die mehrere Medienanschlüssen münden, und mit einem drehbar gelagerten Ventilelement bekannt, wobei den Medienanschlüssen Dichtelemente zugeordnet sind, die in die Verteilerkammer vorstehen.

Aus den Offenlegungsschriften CN 111 288 187 A, FR 2 844 571 A1, EP 3 385 583 A1, DE 10 2018 106298 A1, FR 2 940 396 A1, EP 1 482 222 A1, CH 328 844 A und US 2017/152957 A1 sind weitere Ventileinrichtungen bekannt.

Der vorliegenden Erfindung liegt die Aufgabe zugrunde, eine verbesserte Ventileinrichtung zu schaffen, die zum einen einen Durchfluss beziehungsweise eine Durchströmung eines Mediums durch die Ventileinrichtung selbst mit möglichst geringem Strömungswiderstand ermöglicht, eine hohe Lebensdauer gewährleistet und kostengünstig realisierbar ist.

Die der Erfindung zugrundeliegende Aufgabe wird durch eine Ventileinrichtung mit den Merkmalen des Anspruchs 1 gelöst. Die erfindungsgemäße Ventileinrichtung führt zu den oben genannten Vorteilen und erlaubt darüber hinaus insbesondere auch eine vorteilhafte bauraumsparende Ausbildung mit einer vorteilhaften Anordnung der Medienanschlüsse an dem Gehäuse, die es ermöglicht, Zu- und Ablaufkanäle eines Wasserkreislaufs vorteilhaft der Ventileinrichtung zuzuführen ohne dabei viel zusätzlichen Bauraum in der Umgebung der Ventileinrichtung zu benötigen.

Die erfindungsgemäße Ventileinrichtung zeichnet sich dadurch aus, dass das Ventilelement einen kreiszylinderförmigen Außenmantel aufweist, der koaxial zu der Gehäusewand angeordnet ist und die Medienanschlüsse zumindest im Wesentlichen, insbesondere zumindest in einigen Ventilstellungen, verschließt, und dass das Ventilelement wenigstens einen Medienkanal aufweist, der zumindest zwei Öffnungen in dem Außenmantel aufweist, die in zumindest einer Drehstellung des Ventilelements jeweils einem ausgewählten der Medienanschlüsse zugeordnet sind, um die ausgewählten Medienanschlüsse freizugeben und durch den Medienkanal fluidtechnisch miteinander zu verbinden. Das Ventilelement bildet somit zumindest einen Medienkanal vollständig aus, der in die Öffnungen des Außenmantels mündet, welche in zumindest einer Drehstellung jeweils einem der Medienanschlüsse zugeordnet sind. Durch das Zuordnen der Öffnungen zu den Medienanschlüssen wird der Außenmantel unterbrochen, das Verschließen des jeweiligen Medienanschlusses durch den Außenmantel somit aufgehoben, und eine fluidtechnische Verbindung zwischen Medienanschluss und Medienkanal hergestellt. Weist die Ventileinrichtung nur die Mindestanzahl von Medienanschlüssen, also zwei Medienanschlüsse auf, wirkt die Ventileinrichtung insbesondere als Abstellventil, das einen Durchfluss freigeben, vollständig unterbrechen oder mengentechnisch beeinflussen kann. Bevorzugt weist das Ventilelement zumindest zwei Medienkanäle auf, die jeweils zwei endseitige Öffnungen in der Außenmantelwand aufweisen und dazu ausgebildet sind, in Abhängigkeit von der Drehstellung des Ventilelements unterschiedliche der Medienanschlüsse miteinander zu verbinden, sodass durch ein Verdrehen des Ventilelements beispielsweise ein erster Medienanschluss mit einem zweiten Medienanschluss oder der erste Medienanschluss mit einem dritten Medienanschluss verbunden werden kann. Dadurch ist es möglich, ausgewählte fluidtechnische Verbindungen wahlweise herzustellen und zu unterbrechen. Auch kann ein Medienkanal mehr als zwei Öffnungen, beispielsweise drei Öffnungen aufweisen, um beispielsweise einen als Zulaufanschluss wirkenden Medienanschluss mit zwei als Ablaufanschlüsse wirkenden Medienanschlüsse der Ventileinrichtung zu verbinden. Dadurch, dass der Medienkanal vollständig in dem Ventilelement ausgebildet ist, ergibt sich, dass der Medienkanal ohne oder ohne größere Strömungsquerschnittsverjüngungen herstellbar ist, wodurch Strömungswiderstände durch die Ventileinrichtung minimiert werden. Besonders bevorzugt weist zumindest einer der Medienkanäle insgesamt vier Öffnungen in dem Außenmantel auf, vorzugsweise jeder der Medienkanäle, die in Abhängigkeit von der Drehstellung des Verteilerelements mit unterschiedlichen Medienanschlüssen zusammenwirken können. Dadurch kann der jeweilige Medienkanal auch für unterschiedliche Verbindungsrichtungen oder Verbindungen zwischen den Medienanschlüssen genutzt werden. Dabei sind die Öffnungen insbesondere derart angeordnet, dass immer zwei der Öffnungen eines Medienkanals gleichzeitig jeweils einem der Medienanschlüsse zuordenbar sind. Darüber hinaus erlaubt es die Ventileinrichtung, dass alle Medienanschlüsse in oder an der kreiszylinderförmigen Gehäusewand angeordnet sind, sodass sowohl die Medienzuführung als auch die Medienabführung an der Gehäusewand, insbesondere radial oder beispielsweise tangential, erfolgt, wodurch auf Medienanschlüsse in Axialerstreckung der Ventileinrichtung verzichtet werden kann. Dadurch wird bereits der Bauraum nicht nur der Ventileinrichtung, sondern auch der Medienkanäle außerhalb der Ventileinrichtung reduziert. Unter einem Medienkanal ist dabei vorliegend insbesondere ein Kanal zu verstehen, der bis auf die genannten Öffnungen umfangsseitig geschlossen ausgebildet ist, sodass der Medienkanal einen gezielten oder geführten Verlauf eines Medienstroms gewährleistet. Durch einen strömungsoptimierten Verlauf des jeweiligen Medienkanals werden Strömungswiderstände weiter reduziert und beispielsweise auch Verwirbelungen oder Turbulenzen in dem Medienstrom verhindert. Dadurch, dass der Medienkanal jeweils vollständig in dem Ventilelement ausgebildet ist, ergibt sich eine optimale und besonders flexible Gestaltbarkeit des Medienkanals. Dadurch, dass das Ventilelement direkt mit der Gehäusewand der Ventileinrichtung dichtend oder einen Medienanschluss freigebend zusammenwirkt, ist die Ventileinrichtung selbst ebenfalls bauraumsparend ausgebildet. So kann beispielsweise auf eine zweite, jedoch feststehende Dichtscheibe oder dergleichen in dem Gehäuse, wie bei vorbekannten Ventileinrichtungen üblich, verzichtet werden.

Gemäß einer bevorzugten Weiterbildung der Erfindung weist das Ventilelement wenigstens zwei Medienkanäle mit jeweils zwei Öffnungen in dem Außenmantel auf. Es ergeben sich dadurch insbesondere die oben bereits genannten Vorteile. Die Medienkanäle weisen insbesondere unterschiedliche Verläufe auf, um unterschiedliche Verbindungen der Medienanschlüsse miteinander zu bewirken.

Weiterhin ist bevorzugt vorgesehen, dass wenigstens ein Medienkanal zumindest eine dritte Öffnung in dem Außenmantel aufweist. Dadurch ist der eine Medienkanal vielseitig einsetzbar, um unterschiedliche Schaltstellungen der Ventileinrichtung zu bewirken.

Weiterhin ist bevorzugt vorgesehen, dass das Ventilelement mehrteilig ausgebildet ist und ein becherförmiges Außenelement, das den Außenmantel bildet, und ein in dem Außenelement angeordnetes Verteilerelement aufweist, das zumindest abschnittsweise zu dem Außenelement hin radial offen ausgebildet ist, sodass der jeweilige Medienkanal zwischen dem Verteilerelement und dem Außenmantel des Außenelements gebildet ist. Das Verteilerelement liegt somit außenseitig an der Innenseite des Außenmantels an und ist bereichsweise radial offen zu dem Außenmantel ausgebildet, sodass in den zu dem Außenmantel offenen Abschnitten der jeweilige Medienkanal zwischen Außenelement beziehungsweise Außenmantel und Verteilerelement gebildet ist. Durch die mehrteilige Ausbildung des Ventilelements wird erreicht, dass das Außenelement besonders kostengünstig, beispielsweise becherförmig, herstellbar ist, und dass das Verteilerelement dadurch, dass es radial abschnittsweise offen ausgebildet ist beziehungsweise radiale Vertiefungen, die zusammen mit dem Außenmantel die Medienkanäle bilden, aufweist, eine kostengünstige Herstellung ermöglicht. Insbesondere ist ein Ausformen des Verteilerelements in einer zwei- oder mehrteiligen Spritzgussform, deren Werkzeugformteile radial zu dem Verteilerelement bewegbar sind, kostengünstig realisierbar.

Gemäß einer bevorzugten Weiterbildung der Erfindung sind das Verteilerelement und das Außenelement drehfest miteinander verbunden. Dadurch ist gewährleistet, dass die Zuordnung der Öffnungen in dem Außenmantel des Außenelements zu dem jeweiligen durch das Verteilerelement gebildeten Medienkanal dauerhaft gewährleistet ist. Die drehfeste Verbindung ist bevorzugt durch eine formschlüssige Verbindung von Außenelement und Verteilerelement miteinander gewährleistet. Dazu weist beispielsweise das Verteilerelement einen oder mehrere radial vorstehende Mitnahmeelemente auf und das Außenelement einen oder mehrere radial ausgebildete Mitnahmevertiefungen, wobei die Mitnahmevorsprünge dazu ausgebildet sind, in den Mitnahmevertiefungen einzuliegen, um in Umfangsrichtung einen Formschluss auszubilden, der die Drehmitnahme bewirkt. Insbesondere ist der jeweilige Mitnahmevorsprung korrespondierend zu der jeweiligen Mitnahmeaussparung oder -vertiefung ausgebildet, sodass in Umfangsrichtung gesehen eine zumindest im Wesentlichen spielfreie Aufnahme des Mitnahmevorsprungs in der Mitnahmeaufnahme gewährleistet ist. Gemäß einer weiteren Ausführungsform ist zumindest ein Mitnahmevorsprung alternativ oder zusätzlich an dem Außenelement und zumindest eine Mitnahmeaufnahme zusätzlich oder alternativ an dem Verteilerelement angeordnet oder ausgebildet. Gemäß einer weiteren Ausführungsform sind das Verteilerelement und das Außenelement alternativ oder zusätzlich miteinander verklebt, verschweißt oder verklemmt, um die drehfeste Verbindung zu gewährleisten. Bevorzugt wird zumindest einer der Mitnahmevorsprünge oder Mitnahmeaufnahmen durch eine von einem Kreis abweichende Querschnittskontur von Außenelement und Verteilerelement gebildet.

Weiterhin ist bevorzugt vorgesehen, dass das Verteilerelement einen insbesondere zylinderförmigen Kern aufweist, von welchem mehrere den Verlauf der Medienkanäle definierende Seitenwände radial vorstehen und bis oder nahezu bis an die Innenseite des Außenmantels heranragen. Der Kern bildet einen Wandabschnitt, insbesondere Bodenabschnitt, des jeweiligen Medienkanals, während die Seitenwände den Verlauf des jeweiligen Medienkanals definieren. Zwei Seiten eines Medienkanalquerschnitts werden somit durch die Seitenwände gebildet, eine weitere Seite durch den Kern und die verbleibende Seite durch den Außenmantel des Außenelements. Dadurch, dass die Seitenwände radial von dem Kern nach außen vorstehen, ist eine einfache Entformung des Verteilerelements bei dessen Herstellung gewährleistet, wodurch Herstellungsaufwand und Kosten gering ausfallen. Durch das so ausgebildete Verteilerelement sind auch komplizierte Medienkanalverläufe entlang des Außenumfangs des Kerns beziehungsweise zwischen dem Kern und dem Außenmantel realisierbar. Ragen die Seitenwände bis an die Innenseite des Außenmantels heran, so dichten die Innenwände direkt mit dem Außenmantel den jeweiligen Medienkanal ab. Ragen Sie nahezu bis an die Innenseite heran, so ist vorzugsweise ein zusätzliches Dichtelement zwischen jeder Seitenwand und dem Außenmantel vorgesehen, dass insbesondere unter elastischer Verformung die Abdichtung des Medienkanals gewährleistet.

So ist besonders bevorzugt vorgesehen, dass an der dem Außenmantel zugewandten Stirnseite jeder Seitenwand jeweils ein elastisch verformbarer Dichtsteg angeordnet ist, der sich entlang der gesamten Stirnseite der jeweiligen Seitenwand erstreckt und an dem Außenmantel anliegt. Durch das zusätzliche Dichtelement ist eine einfache Montage des Verteilerelements in dem Außenelement gewährleistet, weil durch die im Vergleich zu der jeweiligen Seitenwand erhöhte Elastizität des Dichtstegs ein einfaches Anpassen des Verteilerelements an das Außenelement gewährleistet ist. Auch ist die Montage durch die Elastizität des jeweiligen Dichtstegs vereinfacht, da beispielsweise ein Verklemmen des Verteilerelements beim Einschieben in das Außenelement verhindert wird.

Vorzugsweise ist der jeweilige Dichtsteg an die Stirnseite der jeweiligen Seitenwand angeformt, insbesondere angespritzt. Das Verteilerelement ist somit in der Art eines Zweikomponentenbauteils gefertigt, mit einem ersten Material, aus welchem der Kern und die Seitenwände gefertigt sind, und mit einem zweiten Material, das im Vergleich zu dem ersten Material eine höhere Elastizität aufweist, und durch welches die Dichtstege oder der Dichtsteg gebildet sind. Durch das Anformen des Dichtstegs an die Seitenwand wird der Dichtsteg bereits bei der Herstellung des Verteilerelements miterzeugt, wodurch Montageschritte reduziert und eine lange Haltbarkeit beziehungsweise dauerhafte Befestigung des Dichtstegs an der Seitenwand gewährleistet werden.

Vorzugsweise bildet jede Seitenwand des Verteilerelements einen geschlossenen Ring. Die jeweilige Seitenwand hat somit keinen Anfang und kein Ende. Durch die geschlossene Ausbildung der Seitenwand entsteht ein insbesondere endseitig geschlossener Medienkanal zwischen Außenmantel und Verteilerelement, der nur durch die Öffnungen in dem Außenmantel zugängig ist.

Erfindungsgemäß ist jedem der Medienanschlüsse jeweils ein eine in die Verteilerkammer führende Mündungsöffnung des jeweiligen Medienanschlusses ringförmig umschließendes Dichtelement zugeordnet, das mit einer elastisch verformbaren und ringförmigen Dichtlippe in die Verteilerkammer vorsteht, um mit dem Außenmantel des Ventilelements dichtend zusammenzuwirken beziehungsweise um einen dichte Verbindung von dem Medienanschluss oder dessen Mündungsöffnung zu dem Ventilelement zu bewirken. Die Dichtelemente dienen somit zur Abdichtung zwischen der Gehäusewand und dem Außenmantel, der relativ zu der Gehäusewand verdrehbar ist. Die Dichtelemente schleifen somit auf der Außenseite des Außenmantels entlang und sind an der Gehäusewand befestigt. Den Innendurchmesser des jeweiligen Dichtelements ist dabei höchstens so groß wie der Innendurchmesser einer der Öffnungen in dem Außenmantel, sodass bei fluchtender Anordnung von Öffnung und Medienanschluss eine dichte Verbindung zwischen dem Medienkanal und dem Medienanschluss gewährleistet und Leckage in den Bereich zwischen Außenmantel und Gehäusewand zumindest weitestgehend verhindert ist. Die Dichtlippe steht dabei insbesondere derart weit vor, dass sie an dem Außenmantel des Ventilelements ringförmig dichtend anliegt.

Vorzugsweise ist das jeweilige Dichtelement in die zugeordnete Mündungsöffnung eingesteckt. Dadurch ist eine formschlüssige Verbindung des Dichtelements mit der Gehäusewand zumindest in Drehrichtung des Ventilelements gewährleistet, sodass ein selbsttätiges Lösen des Dichtelements von dem Gehäuse sicher verhindert ist, insbesondere dann, wenn das Dichtelement mit dem Außenmantel des Ventilelements zusammenwirkt.

Das Dichtelement ist dabei insbesondere direkt, also ohne weitere, separate Stütz- oder Halteelemente in die Mündungsöffnung mit einem Abschnitt eingesteckt, so dass die formschlüssige Verbindung direkt zwischen dem Dichtelement und der Gehäusewand in der Mündungsöffnung ausgebildet ist. Die Dichtlippe steht von der Gehäusewand insbesondere frei vor, bis auf die dichtende Anlage an dem Außenmantel, so dass sie elastisch gut verformbar ist und damit eine hohe Dichtheit gewährleistet. Die Dichtlippe ist dabei insbesondere derart ausgebildet, dass das Dichtelement im Bereich der Dichtlippe, im Längsschnitt gesehen, V-förmig ausgebildet ist beziehungsweise V-förmig, also mit in Richtung der Verteilerkammer größer werdendem Außen- und Innendurchmesser, von der Gehäusewand in die Verteilerkammer vorsteht. Optional weist die Dichtlippe an ihrer von der Mantelwand abgewandten Seite einen Stützring auf, durch welchen die Dichtlippe an der Gehäusewand radial abgestützt ist. Der Stützring ist insbesondere einstückig mit der Dichtlippe beziehungsweise mit dem Dichtelement ausgebildet.

Erfindungsgemäß weist der Außenmantel nur im Bereich der jeweiligen Öffnung des Außenmantels eine die Öffnung umgebende Radialerhebung als Führungshilfe für das Dichtelement auf. Durch die Radialerhebung wird gewährleistet, dass beim Verdrehen des Ventilelements die Dichtlippe des Dichtelements sicher über die jeweilige Öffnung hinweggehoben wird und nicht in dieser verklemmt oder verkantet. Darüber hinaus gewährleistet die Radialerhebung, dass in den Bereichen abseits der jeweiligen Öffnung der radiale Abstand zwischen Außenmantel und Gehäusewand vergrößert und damit die elastische Verformung des Dichtelements reduziert ist. Dadurch wird beim Verdrehen des Ventilelements die zwischen dem Dichtelement und dem Außenmantel wirkende Reibung reduziert und damit kann auch das zum Antrieb notwendige Antriebsdrehmoment für das Ventilelement reduziert werden. Das Ventilelement lässt sich somit leichter drehen, bewirkt reduzierten Verschleiß und gewährleistet dennoch eine in die Umgebung dichtenden Verbindung des jeweiligen Medienanschluss mit dem zugeordneten Medienkanal des Ventilelements. Vorzugsweise ist die Radialerhebung derart ausgebildet, dass ihre radiale Höhe in Richtung der Öffnung stetig zunimmt, um eine Stufe oder dergleichen zu vermeiden. Dabei ist die radiale Erhebung derart geformt und ausgebildet, dass das Dichtelement sicher auf dem Außenmantel aufliegt, wenn sich eine Öffnung in direkter Gegenüberstellung des Dichtelements beziehungsweise des Medienanschlusses befindet. Insbesondere weist dazu die Erhebung ein die Öffnung umgebendes Plateau auf, auf welchem die Dichtlippe des Dichtelements linienförmig oder streifenförmig über Ihren gesamten Umfang gesehen aufliegt.

Gemäß einer bevorzugten Weiterbildung der Erfindung weist das Gehäuse einen die Verteilerkammer axial begrenzenden Boden auf, wobei das Verteilerelement an einem dem Boden zugeordneten Ende mit dem Boden zusammen ein Drehgelenk ausbildet. Das Verteilerelement ist somit an oder in dem Boden drehgelagert. Dadurch, dass das Verteilerelement mit dem Boden zusammen das Drehgelenk ausbildet, ist das Drehgelenk somit direkt in die Verteilereinrichtung integriert und separate Gelenkbauteile, wie beispielsweise Kugellager, werden nicht benötigt. Dadurch ist die Ventileinrichtung bauraumsparend gestaltbar. Durch das Drehgelenk am Boden wird gewährleistet, dass eine Schrägstellung des Ventilelements in dem Gehäuse vermieden und dadurch die koaxiale Anordnung von Gehäuse und Ventilelement beziehungsweise der radiale Abstand zwischen Außenmantel und Gehäusewand über den Umfang gesehen stets eingehalten wird.

Weiterhin weist das Verteilerelement bevorzugt an dem dem Boden zugeordneten Ende einen Axialvorsprung oder eine Axialvertiefung auf, die mit einer Axialvertiefung oder mit einem Axialvorsprung des Bodens zusammen das Drehgelenk ausbildet. Mit dem Axialvorsprung ragt das Verteilerelement beispielsweise in der Axialvertiefung des Bodens ein, um darin drehgelagert zu sein. Dazu weist der Axialvorsprung insbesondere einen kreisförmigen Querschnitt mit Außendurchmesser auf, der nur geringfügig kleiner ist als der Innendurchmesser der insbesondere kreisförmigen Axialvertiefung, um eine möglichst reibungsarme Drehlagerung mit geringem radialem Spiel zu gewährleisten.

Gemäß einer bevorzugten Weiterbildung der Erfindung weist das Außenelement außerdem einen Deckel auf, von welchem der Außenmantel insbesondere axial vorsteht, und an welchem das Verteilerelement an seinem von dem Boden abgewandten Ende axial anliegt. Das Verteilerelement ist somit zwischen dem Deckel des Außenelements und dem Boden des Gehäuses axial festgelegt. Dadurch ist eine einfache Montage der Ventileinrichtung geboten und eine sichere Anordnung des Verteilerelements in der Ventileinrichtung.

Vorzugsweise weist das Gehäuse einen Gehäusedeckel auf, der auf der von dem Boden abgewandten Seite des Ventilelements angeordnet ist und die Verteilerkammer axial begrenzt. Die Verteilerkammer wird somit durch den Boden, den Gehäusedeckel und die sich zwischen Boden und Gehäusedeckel erstreckende Gehäusewand definiert beziehungsweise begrenzt. Das Verteilerelement ist an seinem von dem Boden abgewandten Ende mit einer Steuerwelle verbunden, die durch eine Öffnung des Gehäusedeckels, insbesondere radial dicht, hindurchgeführt ist. Die Steuerwelle dient zum Antreiben beziehungsweise Verstellen des Ventilelements in dem Gehäuse der Ventileinrichtung. Die Steuerwelle ragt durch den Gehäusedeckel hindurch, sodass von außerhalb der Ventileinrichtung ein Drehmoment auf die Steuerwelle beziehungsweise auf das Ventilelement aufbringbar ist. Dadurch, dass die Steuerwelle bevorzugt radial dicht durch die Öffnung des Gehäusedeckels hindurchgeführt ist, ist gewährleistet, dass zwischen Steuerwelle und Gehäusedeckel kein Medium aus dem Verteilergehäuse heraus austreten kann. Für die radial dichte Hindurchführung der Steuerwelle ist insbesondere zumindest ein elastisch verformbares Dichtelement, beispielsweise ein O-Ring oder dergleichen vorgesehen, der zwischen der Steuerwelle und dem Gehäusedeckel wirkt. Die Steuerwelle ist bevorzugt als separates Bauteil zu dem Ventilelement ausgebildet und drehfest mit diesem verbunden. Dazu ist die Steuerwelle beispielsweise mit einem Ende in eine Vertiefung des Deckels beziehungsweise des Außenelements eingesteckt und weist zumindest an dem Ende eine von einem Kreis abweichende Querschnittsform auf, die mit der Innenkontur der Vertiefung des Deckels beziehungsweise des Außenelements korrespondierend zusammenwirkt, um eine Drehsicherung formschlüssig auszubilden. Die Steuerwelle ist somit formschlüssig mit dem Ventilelement drehgesichert verbunden, sodass ein auf die Steuerwelle aufgebrachtes Drehmoment sicher auf das Ventilelement übertragen wird. Alternativ oder zusätzlich ist die Steuerwelle stoffschlüssig mit dem Deckel verbunden, insbesondere durch Verkleben oder Verschweißen. Gemäß einer weiteren Ausführungsform der Erfindung ist die Steuerwelle bevorzugt einstückig mit dem Deckel des Außenelements verbunden. Besonders bevorzugt ist der Deckel des Außenelements außerdem auch einstückig mit dem Außenmantel verbunden.

Weiterhin ist bevorzugt vorgesehen, dass die Steuerwelle zumindest einen radial vorstehenden Axialanschlag aufweist, und dass ein Federelement axial zwischen dem Axialanschlag und dem Deckel des Ventilelements vorgespannt gehalten ist. Durch das Federelement wird der Deckel des Ventilelements und damit das Außenelement in Richtung des Bodens mit einer Vorspannkraft beaufschlagt, durch welche auch das Verteilerelement zwischen dem Außenelement und dem Boden verklemmt wird. Dadurch ist eine eindeutige Positionierung des Ventilelements in dem Gehäuse der Ventileinrichtung dauerhaft gewährleistet. Bei auftretenden Druckspitzen kann jedoch das Ventilelement entgegen der Federkraft axial verschoben werden, wodurch Druckspitzen gut kompensiert werden und die Haltbarkeit der Ventileinrichtung dauerhaft verbessert wird. Hierzu ist das Deckelelement im Normalfall bevorzugt axial beabstandet zu dem Gehäusedeckel angeordnet, die Verteilerkammer ist vorzugsweise also (axial) höher ausgebildet als das Ventilelement.

Gemäß einer bevorzugten Weiterbildung der Erfindung weist das Gehäuse zumindest drei, insbesondere vier oder mehr Medienanschlüsse auf, die insbesondere auf einer axialen Ebene über den Umfang des Gehäuses verteilt angeordnet sind. Diese Medienanschlüsse liegen somit axial gesehen auf einer Höhe beziehungsweise in einer Ebene über den Umfang des Gehäuses verteilt angeordnet. Insbesondere sind die Medienanschlüsse gleichmäßig über den Umfang des Gehäuses verteilt angeordnet. Dadurch ist eine einfache Heranführung von Anschlussschläuchen, -leitungen oder -kanälen sicher gewährleistet. Darüber hinaus ist dadurch eine axial kurzbauende Variante der Ventileinrichtung möglich.

Gemäß einer weiteren Ausführungsform der Erfindung sind die genannten Medienanschlüsse auf zwei axialen Ebenen derart angeordnet, dass zumindest zwei der Medienanschlüsse auf unterschiedlichen axialen Ebenen liegen, wobei die zwei Medienanschlüsse dabei bevorzugt auf dem gleichen Umfangsabschnitt des Gehäuses angeordnet sind und somit axial gesehen übereinander liegen. Besonders bevorzugt sind die Medienanschlüsse auf den zwei axialen Ebenen derart angeordnet, dass jeweils zwei Medienanschlüsse axial einander gegenüberliegen, also auf einer axialen Ebene liegen, und jeweils zwei der Medienanschlüsse sich diametral gegenüberliegen. Damit sind auf einer Seite des Gehäuses zwei Medienanschlüsse (axial) übereinanderliegend angeordneten auf der diametral gegenüberliegenden Seite ebenfalls zwei Medienanschlüsse. Dadurch liegen diese vier Medienanschlüsse alle in einer gemeinsamen Ebene, in welcher auch die Rotationsachse des Ventilelements liegt. Dadurch sind Medienkanäle oder - schläuche von zwei gegenüberliegenden Seiten der Ventileinrichtung zuführbar beziehungsweise zuzuführen. Dies hat den Vorteil, dass in eine Richtung senkrecht zu dieser Anschlussebene keine Medienanschlüsse zu führen sind, wodurch die Ventileinrichtung insgesamt besonders bauraumsparend auch in Bezug auf die Anschluss-Peripherie gestaltet ist. Hierdurch ist eine vorteilhafte Integration der Ventileinrichtung auch in enge Baumverhältnisse, beispielsweise eines Kraftfahrzeugs, gewährleistet.

Besonders bevorzugt ist die Ventileinrichtung als 4/2-Wegeventil, 2/2-Wegeventil oder als 5/3-Wegeventil ausgebildet. Die Ventileinrichtung weist somit bevorzugt vier, zwei oder fünf Medienanschlüsse auf, und zumindest zwei oder drei Extremalstellungen, in welchen zumindest ausgewählte Öffnungen des Außenmantels jeweils fluchtend zu einem Medienanschluss liegen, um das größtmögliche Durchströmungsvolumen für zumindest einen der Medienkanäle zu gewährleisten. Je nach Ausbildung können unterschiedliche Aufgaben durch die Ventileinrichtung in einem Wasserkreislauf oder in einem anderen Medienkreislauf oder Medienführungssystem eines Kraftfahrzeugs übernommen und realisiert werden. Selbstverständlich sind auch noch andere, hier nicht explizit genannte Varianten bezüglich Anzahl der Medienanschlüsse und/oder der Extremalstellungen möglich.

Im Folgenden soll die Erfindung anhand der Zeichnung näher erläutert werden. Dazu zeigen
- Figur 1: eine vorteilhafte Ventileinrichtung gemäß einem ersten Ausführungsbeispiel in einer vereinfachte Längsschnittdarstellung,
- Figur 2: eine perspektivische Detailansicht der Ventileinrichtung,
- Figuren 3A und 3B: unterschiedliche Schaltstellungen der Ventileinrichtung,
- Figur 4: eine Detail-Schnittdarstellung der Ventileinrichtung,
- Figur 5: eine weitere Detailansicht der Ventileinrichtung,
- Figur 6: eine weitere Detailansicht der Ventileinrichtung,
- Figur 7: die Ventileinrichtung gemäß einem zweiten Ausführungsbeispiel in einer vereinfachten Längsschnittdarstellung,
- Figur 8: die Ventileinrichtung gemäß dem zweiten Ausführungsbeispiel in einer vereinfachten Draufsicht,
- Figuren 9A und 9B: unterschiedliche Schaltzustände der Ventileinrichtung gemäß dem zweiten Ausführungsbeispiel, und
- Figur 10: die Ventileinrichtung gemäß einem dritten Ausführungsbeispiel in einer vereinfachte Längsschnittdarstellung.

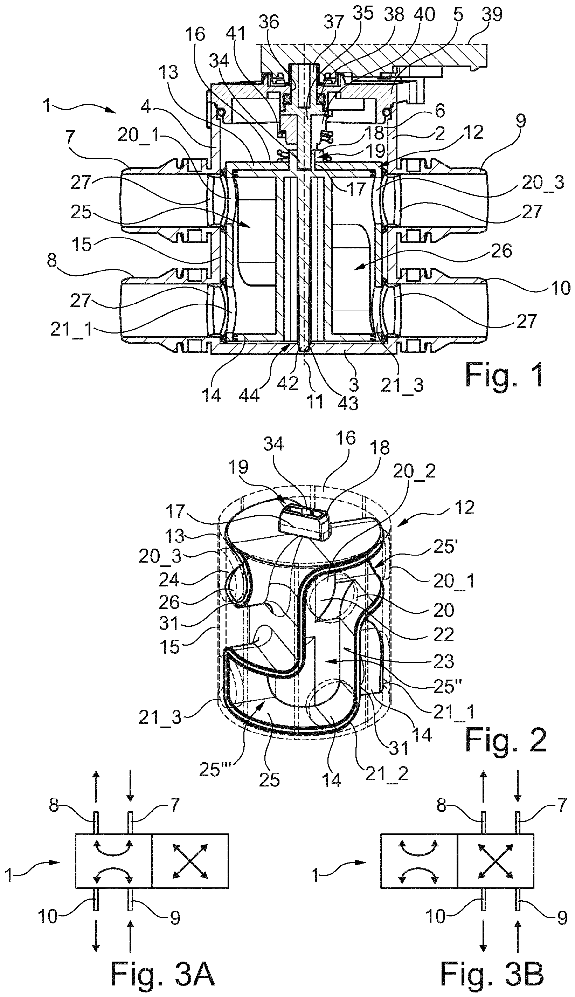

**Figur 1** zeigt in einer vereinfachte Längsschnittdarstellung ein erstes Ausführungsbeispiel einer vorteilhaften Ventileinrichtung 1, die dazu ausgebildet ist, in einem Wasserkreislauf eines Kraftfahrzeugs, insbesondere Kühlwasserkreislauf, eingesetzt zu werden. Dazu weist die Ventileinrichtung 1 ein Gehäuse 2 auf, das einen Boden 3 sowie eine sich von dem Boden 3 aus erstreckende kreiszylinderförmig ausgebildete Mantelwand oder Gehäusewand 4 aufweist, sodass das Gehäuse 2 im Wesentlichen becherförmig ausgebildet ist mit einem U-förmigen Längsschnitt, wie in Figur 1 gezeigt. Auf der von dem Boden 3 abgewandten Seite ist das Gehäuse 2 durch einen Gehäusedeckel 5 verschlossen, sodass in dem Gehäuse 2, durch den Gehäusedeckel 5, den Boden 3 und die Gehäusewand 4 begrenzt, eine Verteilerkammer 6 gebildet ist, die einen kreiszylinderförmigen Querschnitt aufweist.

An der Gehäusewand 4 sind gemäß dem vorliegenden Ausführungsbeispiel vier Medienanschlüsse 7, 8, 9 und 10 ausgebildet, die jeweils in die Verteilerkammer 6 münden. Gemäß dem vorliegenden Ausführungsbeispiel liegen die Medienanschlüsse 7, 9 auf einer axialen Höhe bezogen auf eine geometrische Rotationsachse oder Mittellängsachse 11 des Gehäuses 2. Die Medienanschlüsse 8 und 10 liegen auf einer dazu axial beabstandeten Axialebene. Im Querschnitt oder in einer Draufsicht gesehen liegen dabei die Medienanschlüsse 7, 9 diametral einander gegenüber, ebenso wie die Medienanschlüsse 8 und 10. Dabei liegen alle Medienanschlüsse 7 bis 10 in einer Ebene, in welcher auch die Mittellängsachse 11 liegt. Dadurch liegen die Medienanschlüsse 7,8 und die Medienanschlüsse 9,10 jeweils übereinander, ebenso liegen auch Verbindungsleitungen, die mit den Medienanschlüsse 7, 9, 8, 10 verbunden werden, zumindest im Bereich der Ventileinrichtung 1 in einer gemeinsamen Ebene auf unterschiedlichen Seiten des Gehäuses 2. Dadurch ist die Ventileinrichtung 1 derart bauraumsparen ausgebildet, dass auch die mit ihr zu verbindenden Zuführ- oder Abführleitungen beziehungsweise Medienleitungen oder -kanäle bauraumsparend anordenbar beziehungsweise der Ventileinrichtung 1 zuführbar sind.

In der Verteilerkammer 6 ist ein Ventilelement 12 angeordnet, durch welches die Medienanschlüsse 7-10 fluidtechnisch miteinander verbindbar oder voneinander trennbar sind . Das Ventilelement 12 ist gemäß dem vorliegenden Ausführungsbeispiel zweiteilig ausgebildet und weist dazu ein becherförmiges Außenelement 13 und ein in dem Außenelement 13 angeordnetes Verteilerelement 14 auf.

Das Außenelement 13 weist einen Außenmantel 15 auf, der kreiszylinderförmig ausgebildet und koaxial zu der Gehäusewand 4 angeordnet ist, sowie ein Deckelelement 16, das eine kreisförmige Außenkontur aufweist, und von welchem der Außenmantel 15 aus vorsteht. Dabei liegt der Außenmantel 15 axial zwischen dem Deckelelement 16 und dem Boden 3. Das Deckelelement 16 liegt somit beabstandet zu dem Boden 3, sodass das Außenelement 13 zu dem Boden 3 hin offen ausgebildet ist. Dabei liegt das Deckelelement 16 oberhalb der oberen beziehungsweise vom Boden 3 weiter entfernten Medienanschlüsse 7, 9, sodass sich der Außenmantel 15 von dem Boden 3 vollständig axial an den Medienanschlüssen 7, 8 vorbei bis zu dem Deckelelement 16 erstreckt.

**Figur 2** zeigt in einer vereinfachten perspektivischen Darstellung das Ventilelement 12. Das Außenelement 13 ist dabei durch gestrichelte Linien durchsichtig in Figur 2 gezeigt. Das Deckelelement 16 weist mittig eine Aussparung 17 auf, durch welche ein Axialvorsprung 18 des Verteilerelements 14 hindurchgeführt ist. Die Öffnung 17 und der Axialvorsprung 18 weisen dabei jeweils eine von einem Kreis abweichende Querschnittskontur auf, wobei die Konturen von Axialvorsprung 18 und Aussparung 17 derart korrespondierend zueinander ausgebildet sind, dass der Axialvorsprung 18 unverdrehbar in der Axialaussparung 17 formschlüssig gehalten ist. Dadurch bilden der Axialvorsprung 18 und die Aussparung 17 zusammen eine Drehsicherung 19 aus, die zwischen dem Außenelement 13 und dem Verteilerelement 14 wirkt.

Der Außenmantel 15 weist in einer ersten axialen Ebene oder Höhe vier gleichmäßig über seinen Umfang verteilt ausgebildete Öffnungen 20 auf. Die Öffnungen 20 sind kreisförmig ausgebildet und weisen einen Innendurchmesser auf, der bevorzugt höchstens gleich groß wie der Innendurchmesser der Medienanschlüsse 7, 8, 9, 10 ist, vorzugsweise geringfügig kleiner. Durch die gleichmäßige Verteilung der Öffnungen 20 über den Umfang des Außenmantels 13 liegen sich jeweils zwei der Öffnungen 20 diametral gegenüber.

Auf einer weiteren axialen Ebene liegen beabstandet zu den Öffnungen 20 vier weitere Öffnungen 21 in dem Außenmantel 13, die ebenfalls gleichmäßig über den Umfang des Außenmantels 13 verteilt angeordnet sind. Dabei ist vorliegend vorgesehen, dass die Öffnungen 20, 21 derart gleichmäßig über den Umfang des Außenmantels 13 verteilt angeordnet sind, dass jeweils eine Öffnung 21 unterhalb einer der Öffnungen 20 beziehungsweise in Axial- oder Längserstreckung des Außenmantels 15 einer der Öffnungen 20 liegt.

Das in dem Außenelement 13 angeordnete Verteilerelement 14 bildet zusammen mit dem Außenmantel 15 mehrere, vorliegend zwei, Medienkanäle aus. Dazu weist das Verteilerelement einen zumindest im Wesentlichen zylinderförmigen Kern 22 auf, von welchem zumindest im Wesentlichen radial Seitenwände 23, 24 vorstehen. Die Seitenwände 23, 24 erstrecken sich jeweils in der Art eines geschlossenen Rings, sodass sie keinen Anfang und kein Ende haben. Dabei schließen die Seitenwände 23,24 jeweils einen Medienkanal 25,26 zusammen mit dem Außenmantel 15 ein. Dazu ragen die Seitenwände 23,24 bis an oder bis nahezu an die Innenseite des Außenmantels 15 heran, sodass jeweils ein durch eine der Seitenwände 23,24, den Außenmantel 15 und den Kern 22 geschlossener Raum entsteht, der durch die Öffnungen 20, 21, die auf Höhe des Raums liegen, zugängig ist.

Der durch die jeweilige Seitenwand 23,24, den Kern 22 und den Außenmantel 15 begrenzte Raum wird durch die Öffnungen 20, 21 zum durchströmbaren Medienkanal 25,26. Dabei ist der jeweilige Raum oder Medienkanal 25, 26 jeweils S-förmig verlaufend ausgebildet, sodass der Medienkanal 25, 26 jeweils ein durch die jeweilige Seitenwand 23, 24 in Umfangsrichtung gesehen geschlossenes erstes Ende auf der ersten Ebene der Öffnungen 20 und ein geschlossenes zweites Ende auf der Ebene der Öffnungen 21 aufweist.

Der Medienkanal 25 weist dabei aufgrund seiner S-Form einen ersten, sich in Umfangserstreckung erstreckenden Abschnitt 25', einen zweiten sich in Axialerstreckung des Ventilelements 12 erstreckenden Abschnitt 25" und einen dritten sich in Umfangsrichtung erstreckenden Abschnitt 25‴ auf, wobei sich die Abschnitte 25' und 25‴ zumindest im Wesentlichen auf unterschiedlichen Umfangsabschnitten des Ventilelements 12 erstrecken. Die Abschnitte 25' und 25‴ sind dabei durch den mittleren Abschnitt 25" miteinander verbunden. Der Medienkanal 26 ist insbesondere analog zu dem Medienkanal 25 ausgebildet und verläuft bevorzugt auf der von dem Medienkanal 25 abgewandten Seite des Verteilerelements 14.

Das Ende des Medienkanals 25 in dem Abschnitt 25' ist einer ersten der Öffnungen 20 des Außenmantels 15 zugeordnet. Dem gegenüberliegenden Ende des Abschnitts 25', an welchem der Abschnitt 25' in den Abschnitt 25" übergeht, ist eine zweite der Öffnungen 20 zugeordnet. Dem gegenüberliegenden Ende des Abschnitt 25" ist eine erste der Öffnungen 21 zugeordnet, die entsprechend auch einem Ende des Abschnitts 25‴ zugeordnet ist. Dem diesem Ende gegenüberliegenden Ende des Abschnitts 25‴ ist eine weitere Öffnung 21 zugeordnet.

Zum leichteren Verständnis werden die in Umfangsrichtung verteilt angeordneten Öffnungen 20 und 21 gemäß ihrer Reihenfolge ihrer Anordnung mit 20_1, 20_2, 20_3 und (in Figur 2 nicht erkennbar) 20_4 sowie als 21_1, 21_2, 21_3 und (in Figur 2 nicht erkennbar) 21_4 gekennzeichnet. Dabei liegen die Öffnungen 20_1 und 21_1 in Axialerstreckung auf einer Linie beziehungsweise übereinander oder hintereinander, ebenso wie die Öffnungen 20_2 und 21_2, sowie 20_3 und 21_3 und schließlich auch 20_4 und 21_4, die auf der in **Figur 2** nicht ersichtlichen Rückseite des Ventilelements 12 angeordnet sind. Der Medienkanal 25 verläuft, wie obenstehend beschrieben, S-förmig derart, dass er von der Öffnung 20_1 durch den Abschnitt 25' bis zu der Öffnung 20_2 führt, von der Öffnung 20_2 durch den Abschnitt 25" bis zu der Öffnung 21_2, und von dieser durch den Abschnitt 25‴ bis zu der Öffnung 21_3. Entsprechend ist der in Figur 2 auf der Rückseite ausgebildete Kanal 26 derart ausgebildet, dass er von der Öffnung 20_3 zu der Öffnung 20_4, von dieser zu der Öffnung 21_4, und von dieser zu der Öffnung 21_1 führt. Beide Kanäle 25, 26 sind somit S-förmig ausgebildet und wirkt mit jeweils zwei Öffnungen 20 und mit zwei Öffnungen 21 in dem Außenmantel 15 zusammen. Durch die zuvor beschriebene Verdrehsicherung 19 ist gewährleistet, dass die Zuordnungen der Öffnungen 20, 21 zu den Medienkanälen 25, 26 stehts aufrechterhalten bleibt.

In das Gehäuse 2 eingesetzt ergibt sich durch das Ventilelement 12 nunmehr folgende Funktion, wie sie anhand von **Figuren 3A und 3B** schematisch wiedergegeben ist. Die Ventileinrichtung 1 ist in diesem Fall als 4/2-Wegeventil ausgebildet, das also vier Anschlüsse (Medienanschlüsse 7, 8, 9, 10) und zwei Extremalstellungen, sie in Figuren 3A und 3B gezeigt sind, aufweist, in welchen ein maximales Durchströmungsvolumen gewährleistet ist.

In der ersten Schaltstellung gemäß **Figur 3A** ist das Ventilelement 1 derart in dem Gehäuse 2 gedreht angeordnet, dass die Öffnungen 20_2 und 21_2 den Medienanschlüssen 7, 8 zugeordnet sind, und die in **Figur 2** nicht erkennbaren Öffnungen 20_4 und 21_4 den diametral dazu gegenüberliegend angeordneten Medienanschlüssen 9, 10. Die Öffnungen 21_1 und 21_3 beziehungsweise 20_3 und 21_1 sind dabei einem Abschnitt des Gehäuses 2 beziehungsweise der Gehäusewand 4 zugeordnet, der keine Öffnung oder keinen Medienanschluss 7, 8, 9, 10 aufweist. Insofern ergibt sich als Funktion, dass ein Medienstrom, der beispielsweise durch den Medienanschluss 7 der Ventileinrichtung 1 zugeführt wird, durch den Abschnitt 25" zu der Öffnung 21_2 und damit der Medienanschluss 8 zugeführt beziehungsweise weitergeleitet wird, sodass gemäß dem Ausführungsbeispiel von **Figur 3A** das Medium durch den Medienanschluss 7 einströmt und durch den Medienanschluss 8 wieder ausströmt. Entsprechendes gilt auf der gegenüberliegenden Seite, wo das Medium durch den Medienanschluss 9 einströmt und durch den Medienanschluss 10 ausströmt oder andersherum. Medium, das aus dem Medienkanal 25 durch Öffnungen 20 oder 21 ausströmt, die nicht einem der Medienanschlüsse 7 bis 10 zugeordnet sind, gelangt in den Innenraum des Gehäuses 2, aus welchem es jedoch nicht entweichen kann, weil die Verteilerkammer 6 durch das Gehäuse 2 einerseits und den Gehäusedeckel 5 andererseits dicht verschlossen ist.

Wird das Ventilelement um 45° gedreht, so liegen den Medienanschlüssen 7, 8, 9, 10 keine der Öffnungen 20, 21 gegenüber, vielmehr sind die Medienanschlüsse 7, 8, 9, 10 dann durch den Außenmantel 15 des Ventilelements 2 verschlossen, sodass die Ventileinrichtung 1 eine Durchströmung verhindert oder unterbricht.

Wird das Ventilelement um weitere 45° beziehungsweise ausgehend von der in **Figur 3A** gezeigten Stellung um 90° gedreht, ergibt sich die in **Figur 3B** gezeigte Situation: Die Öffnung 20_1 liegt dann dem Medienanschluss 7 gegenüber und die Öffnung 21_1 dem Medienanschluss 8. Die Öffnung 20_3 liegt dem Medienanschluss 9 gegenüber und die Öffnung 21_3 dem Medienanschluss 10. Die Öffnungen 20_2, 21_2, 20_4 und 21_4 liegen der geschlossenen Gehäusewand 4 gegenüber. Wir weiterhin dem Medienanschluss 7 ein Medium zugeführt, wie durch Pfeile in **Figuren 3A und 3B** gezeigt, so wird dieses Medium durch den gesamten Kanal 25 hindurch geleitet, sodass er durch den Medienanschluss 10 die Ventileinrichtung 1 verlässt. Entsprechend wird der dem Medienanschluss 9 zugeführte Medienstrom durch den Medienkanal 26 dem Medienanschluss 8 zugeführt.

Durch die vorteilhafte Ventileinrichtung 1 sind somit unterschiedliche Schaltstellungen möglich, in denen beispielsweise der Medienstrom vollständig unterbrochen, der Medienstrom von einem oben liegenden Medienanschluss 7, 9 zu einem in Figur 1 unten liegenden Medienanschluss 8, 10 zurückgeleitet wird, oder in der der Medienstrom von einem oben liegenden Medienstrom 7 zu einem diametral dazu gegenüberliegend unteren Medienanschluss 10 beziehungsweise von einem oben liegenden Medienanschluss 9 zu einem diametral gegenüberliegen unteren Medienanschluss 8 geleitet wird. Selbstverständlich kann die Strömungsrichtung auch umgekehrt sein.

Um zu gewährleisten, dass ein möglichst geringer Strömungsverlust und/oder Widerstand vorliegt, ist jedem Medienanschluss 7, 8, 9, 10 jeweils ein Dichtelement 27 zugeordnet, weil die Dichtelemente 27 alle gleich ausgebildet sind, sind sie mit den gleichen Bezugszeichen versehen.

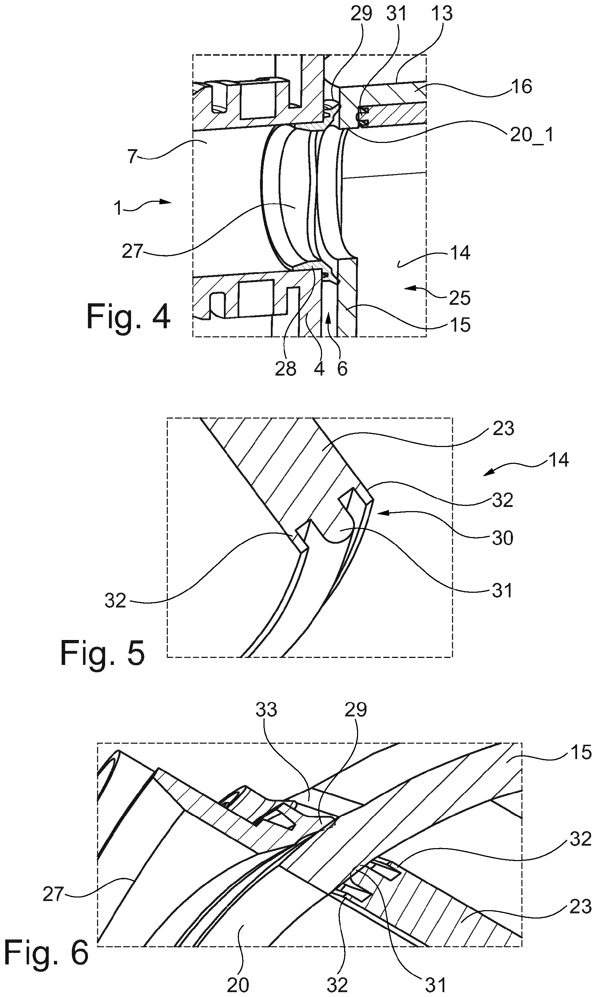

**Figur** 4 zeigt die Ausbildung des jeweiligen Dichtelements 27 am Beispiel des Medienanschluss 7 in einer vergrößerten Detailansicht. Das Dichtelement 27 ist als Dichtring ausgebildet und in eine Mündungsöffnung 28 des Medienanschluss 7 von der Verteilerkammer 6 aus eingesteckt, sodass das Dichtelement 27 mit einer Dichtlippe 29 in die Verteilerkammer 6 vorsteht. Dabei ist das Dichtelement 27 derart ausgebildet, dass es auf der Außenseite des Außenmantels 15 zumindest im Bereich der Öffnungen 20, 21 dichtend anliegt, sodass es die jeweilige Öffnung 20, 21 dichtend ringförmig umgibt. Der radiale Abstand zwischen Außenmantel 15 und Gehäusewand 4 sowie die Dimension der Dichtlippe 29 sind dabei derart gewählt, dass die Dichtlippe 29 zumindest in diesem Betriebszustand elastisch verformt ist, sodass eine Vorspannkraft wirkt, durch welche ein sicheres und dichtes Auffliegen des Dichtelements 27 an dem Außenmantel 15 gewährleistet ist. Weil das Dichtelement 27 zwischen dem Außenelement 13 und der Gehäusewand 4 radial verklemmt oder verspannt ist, ist ein selbsttätiges Lösen des Dichtelements 27 sicher verhindert. In Drehrichtung des Ventilelements 12 beziehungsweise in Umfangsrichtung gesehen ist das Dichtelement 27 durch den in die Mündungsöffnung 28 eingesteckten Abschnitt an der Gehäusewand 4 sicher gehalten. Vorzugsweise sind die Dichtlippen 29 derart ausgebildet, dass diese auch in den übrigen Abschnitten des Außenmantels 15 an dessen Außenseite mit einer verbleibenden Vorspannkraft aufliegen, um auch dort eine dichte Verbindung zu gewährleisten und eine Leckage zu minimieren oder zu verhindern. Das Dichtelement 27 ist dabei insbesondere direkt, also ohne weitere, separate Stütz- oder Halteelemente in die Mündungsöffnung 28 mit einem Abschnitt eingesteckt, so dass die formschlüssige Verbindung direkt zwischen dem Dichtelement 27 und der Gehäusewand 4 in der Mündungsöffnung 28 ausgebildet ist. Die Dichtlippe 29 steht von der Gehäusewand 4 insbesondere frei vor, bis auf die dichtende Anlage an dem Außenmantel 15, so dass sie elastisch gut verformbar ist und damit eine hohe Dichtheit gewährleistet. Die Dichtlippe 29 ist dabei insbesondere derart ausgebildet, dass das Dichtelement 27 im Bereich der Dichtlippe 29, im Längsschnitt gesehen, V-förmig ausgebildet ist beziehungsweise V-förmig von der Gehäusewand 4 in die Verteilerkammer 6 vorsteht. Optional weist die Dichtlippe 29 an ihrer von der Mantelwand 15 abgewandten Seite einen Stützring auf, durch welche die Dichtlippe 29 an der Gehäusewand 4 radial abgestützt ist, wodurch insbesondere die Vorspannkraft erhöht wird. Der Stützring ist, wie in Figur 4 gezeigt, insbesondere einstückig mit der Dichtlippe 29 beziehungsweise mit dem Dichtelement 27 ausgebildet.

**Figur 5** zeigt eine Detailansicht des Verteilerelements 14 im Bereich der Seitenwand 23, wobei die Seitenwand 24 analog zu der Seitenwand 23 ausgebildet ist. Die von dem Kern 22 radial vorstehende Seitenwand 23 weist eine freie Stirnseite 30 auf, die der Innenseite des Außenmantels 15 zugeordnet ist. Um ein Abdichten des Medienkanals 25 zu gewährleisten, weist die Stirnseite 30 einen elastisch verformbaren Dichtsteg 31 auf, der sich entlang der gesamten Stirnseite 30 beziehungsweise der Seitenwand 23 erstreckt und zur dichten bzw. dichtenden Anlage an dem Außenmantel 15 ausgebildet ist. Insbesondere ist im montierten Zustand das Verteilerelement 14 unter elastischer Verformung des jeweiligen Dichtstegs 31 in das Außenelement 13 eingesteckt. Dadurch ist gewährleistet, dass Medium nur durch die Öffnungen 20, 21 in die Medienkanäle 25, 26 oder aus den Medienkanälen 25, 26 gelangen kann. Gemäß dem vorliegenden Ausführungsbeispiel ist der Dichtsteg 31 einstückig mit der Seitenwand 23 ausgebildet. Optional ist der Dichtsteg 31 an die Stirnseite 30 der Seitenwand 23 angeformt und insbesondere stoffschlüssig mit dieser verbunden. So ist das Verteilerelement 14 insbesondere als 2-Komponentenbauteil gefertigt, das einen ersten, weniger elastischen oder harten Werkstoff für die Seitenwände 23, 24 und den Kern 22 aufweist, und einen zweiten, elastischeren oder weichen Werkstoff, der also eine höhere Elastizität als der erste Werkstoff aufweist, für den jeweiligen Dichtsteg 31.

Optional ist der Dichtsteg 31 durch parallel dazu an der Stirnseite 30 verlaufende Sicherungsstege 32, die insbesondere eine niedrigere Elastizität aufweisen und sich weniger weit als der Dichtsteg 31 radial nach außen erstrecken, vor Beschädigungen geschützt.

**Figur 6** zeigt eine weitere Detaildarstellung der Ventileinrichtung 1 im Bereich eines Dichtelements 27. Zum einen zeigt **Figur 6****,** dass der Dichtsteg 31 an der Innenseite des Außenmantels 15 dichtend anliegt, um dem jeweiligen Medienanal 25, 26 abzudichten, und zum anderen zeigt Figur 6 eine Weiterbildung des Außenmantels 15. Diese weist nur im Bereich der jeweiligen Öffnung 20 beziehungsweise 21 jeweils eine Radialerhebung 33 auf, die die jeweilige Öffnung 20, 21 ringförmig umgibt. Die radiale Erhebung oder Radialerhebung 33 dient zum einen als Führungshilfe für die Dichtlippe 29, sodass diese beim Drehen des Ventilelements 12 sicher über die jeweilige Öffnung 20, 21 hinweggehoben oder - geschoben wird, sodass sie nicht einer der Öffnungen 20,21 verklemmen oder verkannten kann. Zum anderen bewirkt die radiale Erhebung 33, dass im übrigen Bereich des Außenmantels 15 der radiale Abstand des Außenmantels 15 zu dem Dichtelement 27 vergrößert und dadurch die Verformung der Dichtlippe 29 reduziert ist. Infolgedessen nimmt auch die Vorspannung ab, mit welcher die Dichtlippe 29 gegen die Außenseite des Außenmantels 15 gedrückt ist. Infolgedessen lässt sich das Ventilelement 12 in Abschnitten, in welchen der Außenmantel 15 geschlossen ist, mit einem geringeren Kraftaufwand verdrehen, als in Abschnitten, in welchen eine Öffnung 20, 21 vorgesehen ist. Dadurch wird zum einen der Verschleiß reduziert und zum anderen die Leistungsanforderung an einen Antrieb zum Verstellen des Ventilelements 12 reduziert.

Zum Verdrehen des Ventilelements 12 ist diese mechanisch mit einem außerhalb des Gehäuses 2 anordenbaren Antriebs verbindbar, wie im Folgenden näher erläutert wird. Insbesondere weist der Axialvorsprung 18 des Deckelelements 16, wie in **Figur 2** gezeigt, eine Axialvertiefung 34 auf, die eine von einem Kreis abweichenden Querschnittsform aufweist. In die Axialvertiefung 34 ist eine Steuerwelle 35 mit einem freien Ende eingesteckt, wie in **Figur 1** gezeigt. Durch die Formgebung der Axialvertiefung 34 und der damit korrespondierenden Formgebung des Querschnitts der Steuerwelle 35 an ihrem dem Axialvorsprung 18 zugewandten freien Ende, wird zwischen der Steuerwelle 35 und dem Ventilelement 12 eine weitere Drehsicherung oder Drehmitnahme gebildet. Die Steuerwelle 35 ragt abschnittsweise durch eine Öffnung 36 in dem Gehäusedeckel 5 aus dem Gehäuse 2 axial mit einem Betätigungsende 37 heraus. Ein Dichtelement 38 in Form eines Dichtrings, insbesondere O-Ring, der insbesondere axial und/oder radial zwischen dem Betätigungsende 37 und dem Gehäusedeckel 5 wirkt, stellt sicher, dass die Steuerwelle 35 dichtend oder dicht durch den Gehäusedeckel 5 nach außen geführt ist, das Medium also nicht aus der Verteilerkammer 6 in die Umgebung gelangen kann. Auf dem Gehäusedeckel 5 ist optional ein Antrieb 39, beispielsweise ein Elektromotor mit oder ohne Übersetzungsgetriebe, befestigt, der auf das Betätigungsende 37 derart aufgesteckt ist, dass er ein Drehmoment auf die Steuerwelle 35 übertragen kann, um das Ventilelement 12 zu betreiben beziehungsweise in der Verteilerkammer 6 zu verdrehen, sodass hierdurch die oben genannten Ventileinstellungen automatisiert vorgenommen werden können.

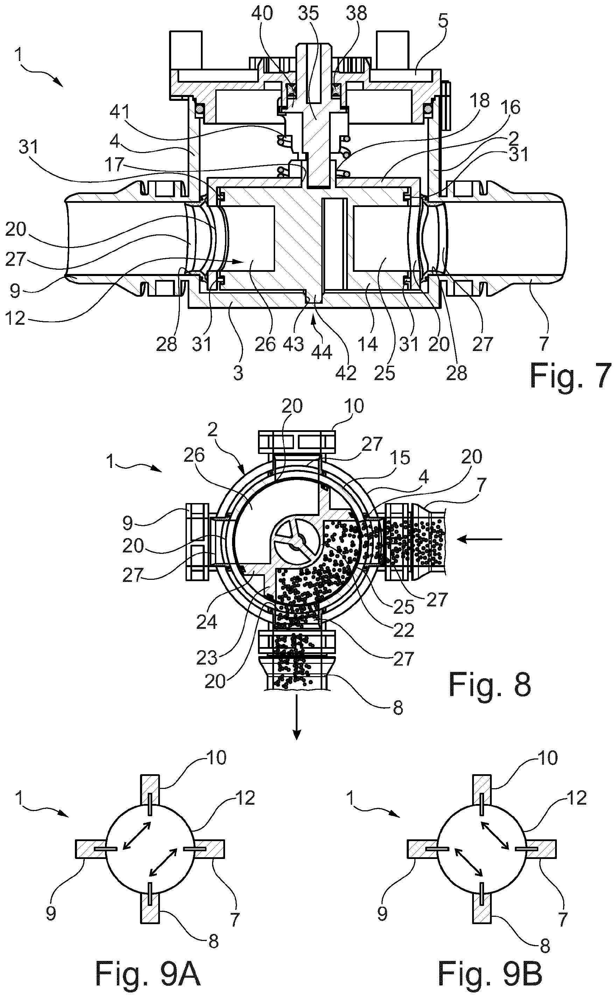

**Figur 7** zeigt in einer weiteren Längsschnittdarstellung ein zweites Ausführungsbeispiel der vorteilhaften Ventileinrichtung 1, wobei aus dem vorhergehenden Ausführungsbeispiel bereits bekannte Element mit den gleichen Bezugszeichen versehen sind und insoweit auf die obenstehende Beschreibung verwiesen wird. Im Folgenden soll im Wesentlichen nur auf die Unterschiede eingegangen werden.

Im Unterschied zu dem ersten Ausführungsbeispiel sind die Medienanschlüsse 7, 8, 9, 10 in dem zweiten Ausführungsbeispiel alle in einer axialen Ebene oder Höhe der Ventileinrichtung 1 gleichmäßig verteilt über den Umfang des Gehäuses 2 beziehungsweise der Gehäusewand 4 angeordnet, wie in einer Draufsicht auf die Ventileinrichtung 1 gemäß dem zweiten Ausführungsbeispiel in **Figur 8** gezeigt.

Dabei sind die Medienkanäle 25,26 derart ausgebildet, dass sie sich in der in **Figur 8** gezeigten Extremalstellung lediglich in Umfangsrichtung von einer Öffnung 20, 21 des Außenmantels 15 bis zu der nächsten benachbarten Öffnung in Umfangsrichtung erstrecken, wie beispielsweise in **Figur 8** ersichtlich. Entsprechend ist auch nur eine Ebene von Öffnungen 20 oder 21, vorliegend Öffnungen 20, in dem Außenmantel vorhanden, die gleichmäßig über den Umfang verteilt angeordnet sind.

**Figuren 9A** und **9B** zeigen in schematischen Darstellungen die Ventilfunktionen der Ventileinrichtung 1 gemäß dem zweiten Ausführungsbeispiel. In einer ersten Stellung sind beispielsweise die Medienanschlüsse 9 und 10 sowie die Medienanschlüsse 8 und 7 jeweils miteinander verbunden, und in einer zweiten Stellung (Figur 9B) die Medienanschlüsse 9, 8 und die Medienanschlüsse 10, 7 jeweils miteinander. In einer Zwischenstellung (Drehung um nur 45°), sind alle Medienanschlüsse 7, 8, 9, 10 durch den Außenmantel 15 verschlossen.

Wie in **Figuren 7** **und** **1** gezeigt, weist die Steuerwelle 35 außerdem einen Axialanschlag 40 auf, der durch einen radial vorstehenden und sich über den gesamten Umfang der Steuerwelle 35 erstreckenden Ringvorsprung gebildet ist. Zwischen dem Axialvorsprung 40 und der dem Gehäusedeckel 5 zugewandten Oberseite des Deckelelements 16 ist ein Federelement, gemäß dem vorliegenden Ausführungsbeispiel eine Schraubenfeder 41, vorgespannt gehalten, die koaxial zu der Steuerwelle 35 angeordnet ist. Durch die Schraubenfeder 41 wird das Ventilelement 12 insgesamt in Richtung des Bodens 3 mit einer Vorspannkraft beaufschlagt, sodass das Außenelement 13 das Verteilerelement 14 gegen den Boden 3 gedrängt, so dass diese dadurch axial zusammengehalten werden.

Zur drehbaren Lagerung des Ventilelements 12 weist das Verteilerelement 14 außerdem an seinem dem Boden 3 zugewandten Ende einen zentralen Axialvorsprung 42 auf, der in einer Axialvertiefung 43 des Bodens 3 einliegt und damit zusammen mit dem Boden 3 beziehungsweise der Axialvertiefung 43 ein Drehgelenk 44 für das Ventilelement 12 ausbildet. Das Ventilelement 12 ist somit durch die Steuerwelle 35 in dem Gehäusedeckel 5 einerseits und durch das Drehgelenk 44 an dem Boden 3 andererseits verdrehbar in dem Gehäuse 2 gelagert. Dies ist insbesondere auch bei dem ersten Ausführungsbeispiel von vorgesehen, wie in **Figur 1** gezeigt.

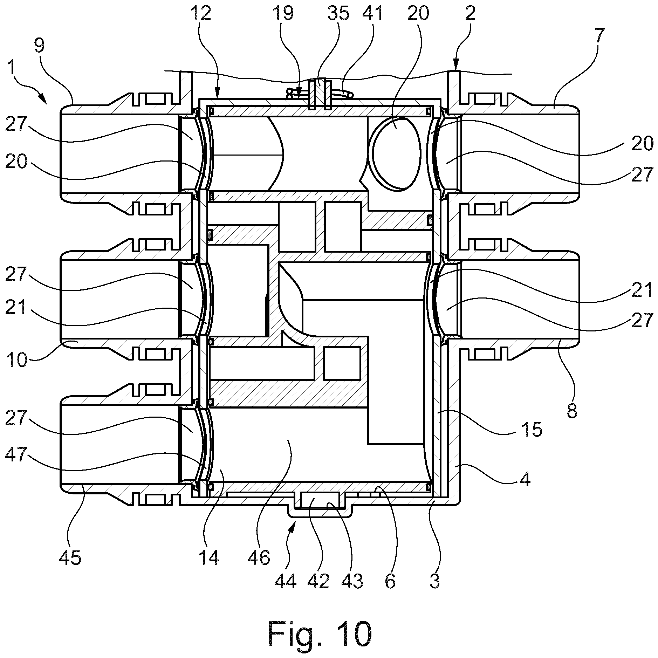

**Figuren 10** zeigt ein drittes Ausführungsbeispiel der vorteilhaften Ventileinrichtung 1, wobei aus den vorhergehenden Ausführungsbeispielen bereits bekannt Elemente mit den gleichen Bezugszeichen versehen sind und insoweit auf die obenstehende Beschreibung verwiesen wird. Im Folgenden soll im Wesentlich nur auf die Unterschiede eingegangen werden.

Im Unterschied zu den vorhergehenden Ausführungsbeispielen weist die Ventileinrichtung 1 gemäß **Figur 10** einen weiteren beziehungsweise fünften Medienanschluss 45 auf. Der weitere Medienanschluss 45 ist insbesondere unterhalb beziehungsweise in einer weiteren axialen Ebene zwischen dem Boden 3 und den bisherigen Medienanschlüssen 7, 8, 9, 10 in der Gehäusewand 4 des Gehäuses 2 ausgebildet beziehungsweise angeordnet und mündet ebenfalls in die Verteilerkammer 6. Das Verteilerelement 14 weist einen zusätzlichen Medienkanal oder Medienkanalabschnitt 46 auf, der beispielsweise in einer Drehstellung des Verteilerelements 14 oder Ventilelements 12 eine fluidtechnische Verbindung von den Medienanschlüssen 7 und/oder 8 zu dem Medienanschluss 45 erlaubt. Dazu weist der Außenmantel 15 zumindest eine weitere Öffnung 47 für den zusätzlichen Medienkanal oder Medienkanalabschnitt 46 auf. Die Ventileinrichtung 1 ist in diesem Ausführungsbeispiel somit als 5/3-Wegeventil ausgebildet.

Selbstverständlich kann auch die Ventileinrichtungen 1 gemäß dem dritten Ausführungsbeispiel Zwischenstellungen einnehmen, wobei die Anzahl der Drehstellungen mit maximalem Durchströmungsquerschnitt auf die oben beschriebene Anzahl jeweils beschränkt ist.

Es zeigt sich somit, dass durch die vorteilhafte Ausbildung der Ventileinrichtung 1 unterschiedliche Anforderungen der Ventileinrichtung 1 erfüllt und eine einfache Anpassung an unterschiedliche Randbedingungen erzielbar ist. Durch die vorteilhafte Ausbildung des Ventilelements 12 wird darüber hinaus erreicht, dass dieses kostengünstig beispielsweise durch Spritzgussverfahren herstellbar ist, da ein radiales Entformen insbesondere des Verteilerelements 14 auch bei komplizierten Kanalverläufen möglich ist. Die aus den oben beschriebenen Ausführungsbeispielen bekannten Merkmale sind auch miteinander kombinierbar. Darüber hinaus sind auch weitere Varianten der Ventileinrichtung 1 möglich, die sich beispielsweise in der Anzahl der Medienkanäle 25, 26 und/oder Medienanschlüsse 7-10, 45 voneinander unterscheiden. So weist ein weiteres Ausführungsbeispiel der Ventileinrichtung 1 beispielsweise nur zwei Medienanschlüsse 7 und 8 auf, die in einer gemeinsamen axialen Ebene liegen oder auf unterschiedlichen axialen Ebenen, und mit einem Verteilerelement 14 zusammenwirken, das beispielsweise nur einen Medienkanal 25 aufweist. In diesem Falle bildet die Ventileinrichtung 1 dann ein Absperrventil, das einen Durchfluss entweder vollständig freigibt, vollständig verschließt oder in der Durchflussmenge beeinflusst.

## Patentansprüche

1. Ventileinrichtung (1), insbesondere für einen Wasserkreislauf eines Kraftfahrzeugs, mit einem Gehäuse (2), das eine kreiszylinderförmige, eine Verteilerkammer (6) umfangsseitig umschließende Gehäusewand (3) und zumindest zwei Medienanschlüsse (7-10,45) in und/oder an der Gehäusewand (3) aufweist, die jeweils als Zulaufanschluss oder Ablaufanschluss für ein hydraulisches Medium ausgebildet sind und beabstandet zueinander in die Verteilerkammer (6) münden, und mit einem in der Verteilerkammer (6) drehbar gelagerten Ventilelement (12) zum wahlweise fluidtechnischen Verbinden oder Trennen von zumindest zwei der Medienanschlüsse (7-10,45) miteinander oder voneinander, wobei das Ventilelement (12) einen kreiszylinderförmigen Außenmantel (15) aufweist, der koaxial zu der Gehäusewand (3) angeordnet ist und die Medienanschlüsse (7-10,45) verschließt, und dass das Ventilelement (12) wenigstens einen Medienkanal (25,26) aufweist, der zumindest zwei Öffnungen (20,21) in dem Außenmantel (15) aufweist, die in zumindest einer Drehstellung des Ventilelements (12) jeweils einem ausgewählten der Medienanschlüsse (7-10,45) zugeordnet sind, um die ausgewählten Medienanschlüsse (7-10,45) freizugeben und durch den Medienkanal (25,26) fluidtechnisch miteinander zu verbinden, **dadurch gekennzeichnet, dass** jedem der Medienanschlüsse (7-10,45) jeweils ein eine in die Verteilerkammer (6) führende Mündungsöffnung (28) des jeweiligen Medienanschluss (7-10,45) umschließendes Dichtelement (27) zugeordnet ist, das mit einer elastisch verformbaren und ringförmigen Dichtlippe (29) in die Verteilerkammer (6) vorsteht, um mit dem Außenmantel (15) des Ventilelements (12) dichtend zusammenzuwirken, und dass der Außenmantel (15) nur im Bereich der jeweiligen Öffnungen (20,21) des Außenmantels (15) eine die Öffnung (20,21) umgebende Radialerhebung (33) als Führungshilfe für das Dichtelement (27) aufweist.

2. Ventileinrichtung nach Anspruch 1, **dadurch gekennzeichnet, dass** das Ventilelement (12) wenigstens zwei Medienkanäle (25,26) mit jeweils zumindest zwei Öffnungen (20,21) in dem Außenmantel (15) aufweist.

3. Ventileinrichtung nach einem der vorhergehenden Ansprüche, **dadurch gekennzeichnet, dass** wenigstens ein Medienkanal (25,26) zumindest eine dritte Öffnung (20_1,20_2,21_2,21_3 ), insbesondere vier Öffnungen (20_1,202,21_2,21_3 ), in dem Außenmantel (15) aufweist.

4. Ventileinrichtung nach einem der vorhergehenden Ansprüche, **dadurch gekennzeichnet, dass** das Ventilelement (12) mehrteilig ausgebildet ist und ein becherförmiges Außenelement (13), das den Außenmantel (15) bildet, und ein in dem Außenelement (13) angeordnetes Verteilerelement (14) aufweist, das zumindest abschnittsweise zu dem Außenmantel (15) hin offen ausgebildet ist, so dass der jeweilig Medienkanal (25,26) zwischen dem Verteilerelement (14) und dem Außenmantel (15) gebildet ist.

5. Ventileinrichtung nach Anspruch 4, **dadurch gekennzeichnet, dass** das Verteilerelement (14) und das Außenelement (13) drehfest miteinander verbunden sind.

6. Ventileinrichtung nach einem der Ansprüche 4 oder 5, **dadurch gekennzeichnet, dass** das Verteilerelement (14) einen insbesondere zylinderförmigen Kern (22) aufweist, von welchem mehrere den Verlauf der Medienkanäle (25,26) definierende Seitenwände (23,24) radial vorstehen und bis oder nahezu bis an die Innenseite des Außenmantels (15) heranragen.

7. Ventileinrichtung nach Anspruch 6, **dadurch gekennzeichnet, dass** an der dem Außenmantel (15) zugewandten Stirnseite (30) jeder Seitenwand (23,24) jeweils ein elastisch verformbarer Dichtsteg (31) angeordnet ist, dass sich entlang der gesamten Stirnseite (30) der der jeweiligen Seitenwand (23,24) erstreckt und zwischen der Stirnseite (30) und dem Außenmantel (15) verspannt ist.

8. Ventileinrichtung nach Anspruch 7, **dadurch gekennzeichnet, dass** der Dichtsteg (31) an die Stirnseite (30) angeformt, insbesondere angespritzt ist.

9. Ventileinrichtung nach einem der Ansprüche 6 bis 7, **dadurch gekennzeichnet, dass** jede Seitenwand (23,24) einen geschlossenen Ring bildet.

10. Ventileinrichtung nach einem der vorhergehenden Ansprüche, **dadurch gekennzeichnet, dass** das jeweilige Dichtelement (27) in die jeweilige Mündungsöffnung (28) eingesteckt ist, so dass eine formschlüssige Verbindung des Dichtelements (27) mit der Gehäusewand (4) zumindest in Drehrichtung des Ventilelements (12) gewährleistet ist.

11. Ventileinrichtung nach einem der vorhergehenden Ansprüche, **dadurch gekennzeichnet, dass** das Dichtelement (27) im Bereich der Dichtlippe (29) im Längsschnitt gesehen V-förmig von der Gehäusewand (4) in die Verteilerkammer (6) vorsteht.

12. Ventileinrichtung nach einem der vorhergehenden Ansprüche, **dadurch gekennzeichnet, dass** das Gehäuse (2) einen die Verteilerkammer (6) axial begrenzenden Boden (3) aufweist und dass das Verteilerelement (14) an einem dem Boden (3) zugeordneten Ende mit dem Boden (3) ein Drehgelenk (44) ausbildet, wobei vorzugsweise das Verteilerelement (14) an dem dem Boden (3) zugeordneten Ende einen Axialvorsprung (42) oder eine Axialvertiefung aufweist, der mit einer Axialvertiefung (43) oder die mit einem Axialvorsprung des Bodens (3) zusammen das Drehgelenk (44) ausbildet.

13. Ventileinrichtung nach einem der vorhergehenden Ansprüche, **dadurch gekennzeichnet, dass** das Außenelement (13) ein Deckelelement (16) aufweist, von welchem der Außenmantel (15) vorsteht, und an welchem das Verteilerelement (14) an seinem von dem Boden (3) abgewandten Ende axial anliegt.

14. Ventileinrichtung nach einem der vorhergehenden Ansprüche, **dadurch gekennzeichnet, dass** das Gehäuse (2) einen Gehäusedeckel (5) aufweist, der auf der von dem Boden (3) abgewandten Seite des Ventilelements (12) angeordnet ist und die Verteilerkammer (6) axial begrenzt, und dass das Verteilerelement (14) auf dem vom Boden (3) abgewandten Ende mit einer Steuerwelle (35) verbunden ist, die durch eine Öffnung (36) des Gehäusedeckels (5), insbesondere radial dicht, hindurchgeführt ist, wobei vorzugsweise die Steuerwelle (35) zumindest einen radial vorstehenden Axialanschlag (40) aufweist, und dass ein Federelement, insbesondere Schraubenfeder (41), axial zwischen dem Axialanschlag (40) und dem Deckelelement (16) des Ventilelements (12) vorgespannt gehalten ist.

15. Ventileinrichtung nach einem der vorhergehenden Ansprüche, **dadurch gekennzeichnet, dass** das Gehäuse (2) zumindest drei, insbesondere vier oder mehr Medienanschlüsse (7-10,45) aufweist, die insbesondere auf einer axialen Ebene über den Umfang des Gehäuses (2) verteilt angeordnet sind.

16. Ventileinrichtung nach einem der vorhergehenden Ansprüche, **dadurch gekennzeichnet, dass** vier Medienanschlüsse (7-10,45) auf zwei axialen Ebenen derart angeordnet sind, dass jeweils zwei Medienanschlüsse (7-10,45) axial übereinanderliegen und jeweils zwei der Medienanschlüsse (7-10,45) sich diametral gegenüberliegen.

17. Ventileinrichtung nach einem der vorhergehenden Ansprüche, **dadurch gekennzeichnet, dass** die Ventileinrichtung (1) als 4/2-Wegeventil, 2/2-Wegeventil oder als 5/3-Wegeventil ausgebildet ist.

## Claims

1. Valve device (1), in particular for a water circuit of a motor vehicle, with a housing (2) comprising a circular-cylindrical housing wall (3) enclosing a distribution chamber (6) on the circumferential side and at least two media connections (7-10,45) in and/or on the housing wall (3), which are each designed as an inlet connection or outlet connection for a hydraulic medium and open into the distribution chamber (6) at a distance from one another, and with a valve element (12) rotatably mounted in the distribution chamber (6) for the purpose of optionally connecting or disconnecting at least two of the media connections (7-10,45) to or from each other fluidically, wherein the valve element (12) comprises a circular-cylindrical outer casing (15) that is arranged coaxially to the housing wall (3) and closes the media connections (7-10,45), and that the valve element (12) comprises at least one media channel (25,26) that comprises at least two openings (20,21) in the outer casing (15), which, in at least one rotational position of the valve element (12), are assigned to a selected one of the media connections (7-10,45) in order to release the selected media connections (7-10,45) and to connect them to one another fluidically through the media channel (25,26),
**characterized in that** a sealing element (27) enclosing an orifice (28) of the respective media connection (7-10,45) leading into the distribution chamber (6) is assigned to each of the media connections (7-10,45), which projects with an elastically deformable and annular sealing lip (29) into the distribution chamber (6) in order to interact sealingly with the outer casing (15) of the valve element (12), and that the outer casing (15) comprises a radial elevation (33) surrounding the opening (20,21) only in the area of the respective openings (20,21) of the outer casing (15) as a guiding aid for the sealing element (27).

2. Valve device according to claim 1, **characterized in that** the valve element (12) comprises at least two media channels (25,26) each having at least two openings (20,21) in the outer casing (15).

3. Valve device according to one of the preceding claims, **characterized in that** at least one media channel (25,26) comprises at least one third opening (20_1,20_2,21_2,21_3), in particular four openings (20_1,20_2,21_2,21_3), in the outer casing (15).

4. Valve device according to one of the preceding claims, **characterized in that** the valve element (12) is designed in several parts and comprises a cup-shaped outer element (13), which forms the outer casing (15), and a distribution element (14) arranged in the outer element (13), which is designed to be open at least in sections towards the outer casing (15), so that the respective media channel (25,26) is formed between the distribution element (14) and the outer casing (15).

5. Valve device according to claim 4, **characterized in that** the distribution element (14) and the outer element (13) are non-rotatably connected to one another.

6. Valve device according to one of claims 4 or 5, **characterized in that** the distribution element (14) comprises a core (22), in particular a cylindrical core, from which a plurality of side walls (23,24) defining the course of the media channels (25,26) project radially and extend up to or almost up to the inside of the outer casing (15).

7. Valve device according to claim 6, **characterized in that** an elastically deformable sealing web (31) is arranged on the front side (30) of each side wall (23,24) facing the outer casing (15), that extends along the entire front side (30) of the respective side wall (23,24) and is clamped between the front side (30) and the outer casing (15).

8. Valve device according to claim 7, **characterized in that** the sealing web (31) is formed on, in particular injection-moulded on, the front side (30).

9. Valve device according to one of claims 6 to 7, **characterized in that** each side wall (23,24) forms a closed ring.

10. Valve device according to one of the preceding claims, **characterized in that** the respective sealing element (27) is inserted into the respective orifice (28) so that a form-fitting connection of the sealing element (27) to the housing wall (4) is ensured at least in the direction of rotation of the valve element (12).

11. Valve device according to one of the preceding claims, **characterized in that** the sealing element (27) projects in the area of the sealing lip (29), as seen in longitudinal section, in a V-shaped manner from the housing wall (4) into the distribution chamber (6).

12. Valve device according to one of the preceding claims, **characterized in that** the housing (2) comprises a base (3) axially delimiting the distribution chamber (6), and **in that** the distribution element (14) forms a pivot joint (44) with the base (3) at an end assigned to the base (3), wherein preferably the distribution element (14) comprises at the end assigned to the base (3) an axial projection (42) or an axial recess, which together with an axial recess (43) or an axial projection of the base (3) forms the pivot joint (44).

13. Valve device according to one of the preceding claims, **characterized in that** the outer element (13) comprises a cover element (16), from which the outer casing (15) projects and on which the distribution element (14) rests axially at its end facing away from the base (3).

14. Valve device according to one of the preceding claims, **characterized in that** the housing (2) comprises a housing cover (5) which is arranged on that side of the valve element (12) which faces away from the base (3) and delimits the distribution chamber (6) axially, and that the distribution element (14) is connected, on the end facing away from the base (3), to a control shaft (35) that is guided through an opening (36) in the housing cover (5), in particular in a radially sealed manner, wherein preferably the control shaft (35) comprises at least one radially projecting axial stop (40), and that a spring element, in particular a helical spring (41), is held pretensioned axially between the axial stop (40) and the cover element (16) of the valve element (12).

15. Valve device according to one of the preceding claims, **characterized in that** the housing (2) comprises at least three, in particular four or more media connections (7-10,45), which are arranged in particular in an axial plane distributed over the circumference of the housing (2).

16. Valve device according to one of the preceding claims, **characterized in that** four media connections (7-10,45) are arranged on two axial levels in such a way that in each case two media connections (7-10,45) are located axially one above the other and in each case two of the media connections (7-10,45) are located diametrically opposite one another.

17. Valve device according to one of the preceding claims, **characterized in that** the valve device (1) is designed as a 4/2-way valve, 2/2-way valve or as a 5/3-way valve.

## Revendications

1. Dispositif de soupape (1), en particulier pour un circuit d'eau d'un véhicule à moteur, avec un carter (2) qui présente une paroi de carter (3) en forme de cylindre entourant côté périphérie une chambre de répartition (6) et au moins deux raccords de fluide (7-10, 45) dans et/ou au niveau de la paroi de carter (3) qui sont respectivement configurés en tant que raccord d'admission ou raccord d'évacuation pour un fluide hydraulique et débouchent à distance l'un par rapport à l'autre dans la chambre de répartition (6), et avec un élément de soupape (12) logé de manière rotative dans la chambre de répartition (6) destiné à une liaison ou une séparation sélectivement hydraulique d'au moins deux des raccords de fluide (7-10, 45) l'un avec l'autre ou l'un de l'autre, dans lequel l'élément de soupape (12) présente une enveloppe externe de forme cylindrique (15) qui est disposée coaxialement par rapport à la paroi de carter (3) et ferme les raccords de fluide (7-10, 45) et en ce que l'élément de soupape (12) présente au moins un canal de fluide (25, 26) qui présente au moins deux ouvertures (20, 21) dans l'enveloppe externe (15) qui sont respectivement associées dans au moins une position de rotation de l'élément de soupape (12) à un raccord de fluide sélectionné des raccords de fluide (7-10, 45) pour libérer les raccords de fluide (7-10, 45) sélectionnés et les relier les uns aux autres de manière hydraulique à travers le canal de fluide (25, 26), **caractérisé en ce que** respectivement un élément d'étanchéité (27) entourant une ouverture d'embouchure (28) du raccord de fluide (7-10, 45) respectif et conduisant dans la chambre de répartition (6) est associé à chacun des raccords de fluide (7-10, 45), élément d'étanchéité qui fait saillie dans la chambre de répartition (6) avec une lèvre d'étanchéité déformable élastiquement et de forme annulaire (29) pour coopérer de manière étanche avec l'enveloppe externe (15) de l'élément de soupape (12), et **en ce que** l'enveloppe externe (15) ne présente un sommet radial (33) entourant l'ouverture (20, 21) en tant qu'aide de guidage (33) pour l'élément d'étanchéité (27) que dans la zone des ouvertures (20, 21) respectives de l'enveloppe externe (15).

2. Dispositif de soupape selon la revendication 1, **caractérisé en ce que** l'élément de soupape (12) présente au moins deux canaux de fluide (25, 26) avec respectivement au moins deux ouvertures (20, 21) dans l'enveloppe externe (15).

3. Dispositif de soupape selon l'une quelconque des revendications précédentes,
**caractérisé en ce qu'**au moins un canal de fluide (25, 26) présente au moins une troisième ouverture (20_1, 20_2, 21_2, 21_3), en particulier quatre ouvertures (20_1, 20_2, 21_2, 21_3) dans l'enveloppe externe (15).

4. Dispositif de soupape selon l'une quelconque des revendications précédentes,
**caractérisé en ce que** l'élément de soupape (12) est configuré en plusieurs parties et présente un élément externe en forme de coupe (13) qui forme l'enveloppe externe (15) et un élément de répartition (14) disposé dans l'élément externe (13), qui est configuré ouvert au moins par sections vers l'enveloppe externe (15) de sorte que le canal de fluide (25, 26) respectif est formé entre l'élément de répartition (14) et l'enveloppe externe (15).

5. Dispositif de soupape selon la revendication 4, **caractérisé en ce que** l'élément de répartition (14) et l'élément externe (13) sont reliés l'un à l'autre de manière fixe en rotation.

6. Dispositif de soupape selon l'une quelconque des revendications 4 ou 5,
**caractérisé en ce que** l'élément de répartition (14) présente un noyau en particulier en forme de cylindre (22) à partir duquel plusieurs parois latérales (23, 24) définissant le tracé des canaux de fluide (25, 26) font saillie radialement et s'approchent jusqu'au ou presque jusqu'au côté interne de l'enveloppe externe (15).

7. Dispositif de soupape selon la revendication 6, **caractérisé en ce que,** au niveau du côté avant (30) de chaque paroi latérale (23, 24) orienté vers l'enveloppe externe (15) un épaulement d'étanchéité (31) élastiquement déformable est respectivement disposé, qui s'étend le long de tout le côté avant (30) de la paroi latérale (23, 24) respective et est tendue entre le côté avant (30) et l'enveloppe externe (15).

8. Dispositif de soupape selon la revendication 7, **caractérisé en ce que** l'épaulement d'étanchéité (31) est formé au niveau du côté avant (30), en particulier injecté.

9. Dispositif de soupape selon l'une quelconque des revendications 6 à 7,
**caractérisé en ce que** chaque paroi latérale (23, 24) forme un anneau fermé.

10. Dispositif de soupape selon l'une quelconque des revendications précédentes,
**caractérisé en ce que** l'élément d'étanchéité (27) respectif est inséré dans l'ouverture d'embouchure (28) respective de sorte qu'une liaison par complémentarité de formes de l'élément d'étanchéité (27) avec la paroi de carter (4) est assurée au moins dans la direction de rotation de l'élément de soupape (12).

11. Dispositif de soupape selon l'une quelconque des revendications précédentes,
**caractérisé en ce que** dans la zone de la lèvre d'étanchéité (29) l'élément d'étanchéité (27) vu en coupe longitudinale fait saillie en forme de V de la paroi de carter (4) jusque dans la chambre de répartition (6).

12. Dispositif de soupape selon l'une quelconque des revendications précédentes,
**caractérisé en ce que** le carter (2) présente un fond (3) délimitant axialement la chambre de répartition (6) et **en ce que** l'élément de répartition (14) configure avec le fond (3) une articulation rotative (44) au niveau d'une extrémité associée au fond (3), dans lequel de préférence l'élément de répartition (14) présente au niveau de l'extrémité associée au fond (3) une saillie axiale (42) ou une cavité axiale, qui configure l'articulation rotative (44) conjointement avec une cavité axiale (43) ou avec une saillie axiale du fond (3).

13. Dispositif de soupape selon l'une quelconque des revendications précédentes,
**caractérisé en ce que** l'élément externe (13) présente un élément de couvercle (16) d'où fait saillie l'enveloppe externe (15) et au niveau duquel l'élément de répartition (14) repose axialement au niveau de son extrémité opposée au fond (3).

14. Dispositif de soupape selon l'une quelconque des revendications précédentes,
**caractérisé en ce que** le carter (2) présente un couvercle de carter (5) qui est disposé sur le côté de l'élément de soupape (12) opposé au fond (3) et délimite axialement la chambre de répartition (6) et **en ce que** l'élément de répartition (14) est relié à un arbre de commande (35) sur l'extrémité opposée au fond (3), arbre de commande qui est traversé par une ouverture (36) du couvercle de carter (5), en particulier de manière radiale et étanche, dans lequel de préférence l'arbre de commande (35) présente au moins une butée axiale (40) faisant saillie radialement et **en ce qu'**un élément formant ressort, en particulier un ressort à vis (41), est maintenu prétendu axialement entre la butée axiale (40) et l'élément de couvercle (16) de l'élément de soupape (12).

15. Dispositif de soupape selon l'une quelconque des revendications précédentes,
**caractérisé en ce que** le carter (2) présente au moins trois, en particulier quatre raccords de fluide (7-10, 45) ou plus qui sont disposés répartis en particulier sur un plan axial par-dessus la périphérie du carter (2).

16. Dispositif de soupape selon l'une quelconque des revendications précédentes,
**caractérisé en ce que** quatre raccords de fluide (7-10, 45) sont disposés sur deux plans axiaux, de telle sorte que respectivement deux raccords de fluide (7-10, 45) sont superposés axialement et respectivement deux des raccords de fluide (7-10, 45) sont diamétralement opposés.

17. Dispositif de soupape selon l'une quelconque des revendications précédentes,
**caractérisé en ce que** le dispositif de soupape (1) est configuré en tant que soupape à 4/2 voies, soupape à 2/2 voies ou en tant que soupape à 5/3 voies.
